# EUROPEAN PATENT APPLICATION

(11) **EP 3 391 751 A1**
(43) Date of publication of application: **24.10.2018**
(21) Application number: 16875707.8
(22) Date of filing: 15.12.2016
(51) Int. Cl.: A23C 9/13, A23C 21/02, A23L 2/00, A23L 2/38, A23L 2/70

(54) **MICROBIAL CELL-CONTAINING BEVERAGE**

(30) Priority: 18.12.2015 JP 2015247787
(71) Applicant: Asahi Soft Drinks Co., Ltd., Tokyo 130-8602 (JP); Asahi Group Holdings, Ltd., Tokyo 130-8602 (JP)
(72) Inventor: SHIBATA Yusuke, Moriya-shi Ibaraki 302-0106 (JP); KOIZUMI Tetsuo, Moriya-shi Ibaraki 302-0106 (JP); YOSHIKAWA Toru, Tokyo 130-8602 (JP)
(74) Representative: D Young & Co LLP
(86) International application number: PCT/JP2016/087328
(87) International publication number: WO 2017/104730

(57) **Abstract**

The present invention provides an effective means for improving the dispersibility of sediments or aggregates of microbial cells generated at the time of production and during storage of a food or beverage product containing microbial cells such as lactic acid bacteria. The present invention provides a beverage that contains microbial cells comprising (A) microbial cell powder and (B) polyglycerin fatty acid ester composed of polyglycerin having a polymerization degree of 3 to 10 and fatty acid having 10 to 18 carbon atoms connected by ester bonds.

## Description

### Technical Field

The present invention relates to a beverage that contains microbial cells, such as lactic acid bacteria, and a method for producing the same.

### Background Art

In an environment marked by health consciousness in recent years, lactic acid bacteria have drawn attention as functional components that have useful biological activity for health. It has been known that a wide variety of lactic acid bacteria have different biological activities, such as activity of regulating intestinal functions, anti-allergic activity, activity of cholesterol reduction, blood-pressure lowering activity, skin-beauty-enhancing activity, and sound-sleep-promoting activity. In addition, research on lactic acid bacteria having novel biological activity has been in progress. For example, *Lactobacillus amylovorous* CP1563 is reported to be effective for improvement of lipid metabolism and/or sugar metabolism (Patent Document 1) and disruption of such strain is reported to lead to improved lipid metabolism (Patent Document 2). Consumers' health consciousness is satisfied with beverages containing lactic acid bacteria because such beverages enable daily ingestion of lactic acid bacteria in a simple manner. Thus, needs therefor are expected to further increase going forward.

Examples of methods for producing beverages containing lactic acid bacteria include: a method in which lactic acid bacteria are added to raw milk, so as to prepare fermented milk, following which the resulting fermented milk is incorporated into beverages; and a method in which lactic acid bacteria are dried via lyophilization or other means and the resulting dry powders of lactic acid bacteria are incorporated into beverages. However, beverages containing lactic acid bacteria produced by such methods have suffered from problems such as aggregation or sedimentation of milk proteins or microbial powder in fermented milk during storage or clouding caused by fermented milk. In the past, methods comprising the addition of a stabilizer, such as pectin, gum, or a soybean polysaccharide (Patent Document 3 and Patent Document 4), a method comprising the addition of fermented cellulose and a soybean polysaccharide (Patent Document 5), and other methods aimed at prevention of beverages containing lactic acid bacteria from undergoing sedimentation of milk proteins and improving storage stability have been reported. Emulsifiers such as glycerin fatty acid esters often have been used for emulsification, dispersion, penetration, washing, foaming, defoaming, release, or other purposes at the time of food processing, and such agents often have been used for prevention of separation of oils and fats during storage in the case of beverages. For example, Patent Document 6 discloses that the use of polyglycerin fatty acid ester and sucrose fatty acid ester in combination would lead to production of milk beverages that are satisfactorily emulsified and are excellent in terms of storage stability. According to such techniques, however, stabilization is to be achieved by suppression of milk protein aggregation or promotion of milk fat dispersion, and the dispersibility of sediments or aggregates of microbial cells, such as lactic acid bacteria, is not improved.

### Prior Art Documents

### Patent Documents

[Patent Document 1] JP Patent No. 5,690,416
[Patent Document 2] JP Patent No. 5,801,802
[Patent Document 3] JP 2005-185132 A
[Patent Document 4] JP Patent No 4,017,175
[Patent Document 5] JP 2014-19 A
[Patent Document 6] JP Patent No. 3,509,566

### Summary of the Invention

### Problems to be Solved by the Invention

When microbial cells such as lactic acid bacteria are to be ingested by means of a beverage, it is preferable that such beverage contain microbial cell powders, so as to increase the range of types of final products. When a biologically active material existing inside the cell is to be ingested, it is preferable that the relevant beverage contain disrupted microbial cell powders. In such a case, however, microbial cell powders sink downward in the beverage during storage. In the case of disrupted microbial cell powders, in particular, cell powders adhere to each other, or cell powders adhere to the bottom of the container, and solid sediment is formed disadvantageously. Thus, ingestion of a biologically active material has been found to be difficult, and relevant beverages have been found to suffer from poor appearance. In the case of a carbonated beverage that is introduced into a bottle that cannot be shaken before it is opened, in particular, such beverage would suffer from a difficulty related to dispersion of sediment at the bottom of the container. At the time of production, also, microbial cell powders (and disrupted microbial cell powders, in particular) aggregate, and a container cannot be filled homogeneously with microbial cells.

Under the above circumstances, it is an object of the present invention to provide an effective means for improving the dispersibility of a sediment or aggregate of microbial cells generated at the time of production and during storage of a beverage containing microbial cells such as lactic acid bacteria.

### Means for Solving the Problem

The present inventors have conducted concentrated studies in order to attain the above object. As a result, they discovered that incorporation of powders of microbial cells such as lactic acid bacteria together with polyglycerin fatty acid ester alone or polyglycerin fatty acid ester in combination with organic acid monoglyceride into the beverage would significantly improve the dispersibility of the sediments or aggregates of microbial cells that are generated at the time of production and during storage of a beverage containing microbial cells such as lactic acid bacteria. This has led to the completion of the present invention.

Specifically, the present invention includes the following.
(1) A beverage that contains microbial cells comprising (A) microbial cell powder and (B) polyglycerin fatty acid ester composed of polyglycerin having a polymerization degree of 3 to 10 and fatty acid having 10 to 18 carbon atoms connected by ester bonds.
(2) The beverage that contains microbial cells according to (1), wherein the polyglycerin fatty acid ester is pentaglycerin monolaurate.
(3) The beverage that contains microbial cells according to (1) or (2), wherein the beverage further contains organic acid monoglyceride.
(4) The beverage that contains microbial cells according to (3), wherein an organic acid constituting the organic acid monoglyceride is selected from among acetic acid, lactic acid, citric acid, succinic acid, and diacetyl tartaric acid.
(5) The beverage that contains microbial cells according to (3) or (4), wherein, provided that the polyglycerin fatty acid ester content relative to the total amount of the beverage is designated X and the organic acid monoglyceride content relative to the total amount of the beverage is designated Y, the value of Y/X is 10 or less by mass.
(6) The beverage that contains microbial cells according to any of (3) to (5), wherein the beverage contains pentaglycerin monolaurate and succinic acid ester of glycerin monostearate.
(7) The beverage that contains microbial cells according to any of (3) to (5), wherein the beverage contains pentaglycerin monomyristate and diacetyl tartaric acid ester of glycerin monostearate.
(8) The beverage that contains microbial cells according to any of (3) to (5), wherein the beverage contains decaglycerin monomyristate, pentaglycerin monolaurate, and succinic acid ester of glycerin monostearate.
(9) The beverage that contains microbial cells according to (1) or (2), wherein the polyglycerin fatty acid ester content in the beverage is 0.001% to 0.2% by mass.
(10) The beverage that contains microbial cells according to any of (3) to (8), wherein the content of polyglycerin fatty acid ester and organic acid monoglyceride in the beverage is 0.001% to 0.2% by mass.
(11) The beverage that contains microbial cells according to any of (1) to (10), wherein the microbial cells are disrupted cells.
(12) The beverage that contains microbial cells according to any of (1) to (11), wherein the microbial cells are lactic acid bacteria.
(13) The beverage that contains microbial cells according to (12), wherein the lactic acid bacteria belong to the genus *Lactobacillus.*
(14) The beverage that contains microbial cells according to any of (1) to (13), wherein the beverage contains milk.
(15) The beverage that contains microbial cells according to any of (1) to (14), wherein the beverage contains carbon dioxide.
(16) A method for producing a beverage that contains microbial cells, comprising a step of mixing a solution containing microbial cell powders with an emulsifier solution containing polyglycerin fatty acid ester dispersed in an alkaline solution at 50°C to 90°C and homogenizing the mixture.
(17) A method for producing a beverage that contains microbial cells, comprising a step of mixing a solution containing microbial cell powders with an emulsifier solution containing polyglycerin fatty acid ester and organic acid monoglyceride dispersed in an alkaline solution at 50°C to 90°C and homogenizing the mixture.
(18) The method for producing a beverage that contains microbial cells according to (16) or (17), wherein the microbial cells are disrupted cells.
(19) A method for improving the dispersibility of a sediment or aggregate of microbial cells in a food or beverage product by mixing a solution containing microbial cell powders with an emulsifier solution containing polyglycerin fatty acid ester dispersed in an alkaline solution at 50°C to 90°C and homogenizing the mixture.
(20) A method for improving the dispersibility of a sediment or aggregate of microbial cells in a food or beverage product by mixing a solution containing microbial cell powders with an emulsifier solution containing polyglycerin fatty acid ester and organic acid monoglyceride dispersed in an alkaline solution at 50°C to 90°C and homogenizing the mixture.
(21) The method for improving the dispersibility of a sediment or aggregate of microbial cells in a food or beverage product according to (19) or (20), wherein the microbial cells are disrupted cells.

This patent application claims priority from Japanese Patent Application No. 2015-247787 filed on December 18, 2015, and it includes part or all of the contents as disclosed in the description thereof.

### Effects of the Invention

The present invention provides a beverage that contains microbial cells such as lactic acid bacteria, which are useful as functional components for maintenance and improvement of health and are excellent in stability at the time of production and during storage. In the beverage of the present invention, sediments or aggregates of microbial cells generated during storage are sufficiently dispersed, and sediments or aggregates do not adhere to the bottom of the container. According to the present invention, therefore, microbial cells such as lactic acid bacteria can be incorporated into a carbonated beverage contained in a bottle that cannot be strongly shaken before it is opened, so as to disperse the sediment. According to the present invention, in addition, microbial cell dispersibility at the time of production can be improved, and the beverage can thus homogeneously contain microbial cells.

### Brief Description of the Drawing

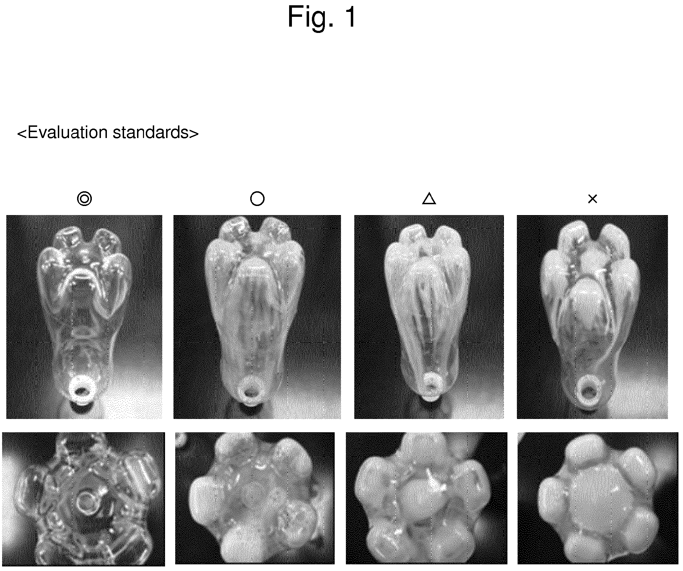

Fig. 1 shows photographs of the bottoms and the overall appearances of the containers indicating the evaluation standards for sedimentation.

### Embodiments for Carrying out the Invention

### 1. Beverage that contains microbial cells and method for producing the same

The beverage of the present invention contains microbial cell powders and an emulsifier that improves the dispersibility of a sediment or aggregate of microbial cells generated at the time of production and during storage. Examples of types of the beverages of the present invention include milk beverages, carbonated beverages, fruit/vegetable juice beverages, tea beverages, coffee beverages, functional beverages, and sports beverages.

### [Microbial cells]

Representative examples of microbial cells used for the beverage of the present invention are lactic acid bacteria, although microbial cells are not limited thereto. For example, yeast cells may be used. In addition to a lactic acid bacillus and lactic acid cocci, in a broad sense, *Bifidobacterium* is within the scope of lactic acid bacteria. Lactic acid bacteria are not particularly limited, provided that they are generally used for food or beverage products. Examples thereof include those belonging to the genera *Lactobacillus, Bifidobacterium, Leuconostoc, Lactococcus, Pediococcus, Enterococcus, Streptococcus,* and *Weissella,* with lactic acid bacteria belonging to the genus *Lactobacillus* being particularly preferable. Such lactic acid bacteria may be used alone or in combinations of two or more.

Examples of lactic acid bacteria belonging to the genus *Lactobacillus* include *Lactobacillus amylovorous, Lactobacillus gasseri, Lactobacillus acidophilus, Lactobacillus brevis, Lactobacillus casei, Lactobacillus delbrueckii, Lactobacillus fermentum, Lactobacillus helveticus, Lactobacillus kefir, Lactobacillus paracasei, Lactobacillus plantarum, Lactobacillus bulgaricus, Lactobacillus rhamnosus, Lactobacillus salivarius, Lactobacillus johnsonii, Lactobacillus crispatus,* and *Lactobacillus gallinarum.*

Lactic acid bacteria belonging to the genus *Bifidobacterium* are also referred to as "bifidobacteria," and examples of such lactic acid bacteria include *Bifidobacterium infantis, Bifidobacterium adolescentis, Bifidobacterium breve, Bifidobacterium longum, Bifidobacterium pseudolongum, Bifidobacterium animalis, Bifidobacterium bifidum, Bifidobacterium lactis, Bifidobacterium catenulatum, Bifidobacterium pseudocatenulatum,* and *Bifidobacterium magnum.*

Examples of lactic acid bacteria belonging to the genus *Leuconostoc* include *Leuconostoc mesenteroides* and *Leuconostoc lactis.*

Examples of lactic acid bacteria belonging to the genus *Lactococcus* include *Lactococcus lactis, Lactococcus plantarum, Lactococcus raffinolactis,* and *Lactococcus cremoris.*

Examples of lactic acid bacteria belonging to the genus *Pediococcus* include *Pediococcus pentosaceus* and *Pediococcus damnosus.*

Examples of lactic acid bacteria belonging to the genus *Enterococcus* include *Enterococcus faecalis, Enterococcus hirae,* and *Enterococcus faecium.*

Examples of lactic acid bacteria belonging to the genus *Streptococcus* include *Streptococcus thermophilus, Streptococcus lactis, Streptococcus diacetilactis,* and *Streptococcus faecalis.*

Examples of lactic acid bacteria belonging to the genus *Weissella* include *Weissella cibaria, Weissella confusa, Weissella halotolerans, Weissella hellenica, Weissella kandleri, Weissella kimchii, Weissella koreensis, Weissella minor, Weissella paramesenteroides, Weissella soli, Weissella thailandensis,* and *Weissella viridescens.*

Cells that belong to the genera of lactic acid bacteria described above that are used for the beverage of the present invention may be any cells isolated from nature, deposited cells, preserved cells, and commercially available cells, for example.

Microbial cells used for the beverage of the present invention, which are preferably selected from among various lactic acid bacteria, can be cultured under general conditions with the use of a medium that is generally used for culture of lactic acid bacteria, and the cells of interest can be then grown and recovered.

In general, either a natural or synthetic medium may be used for culture, provided that it contains carbon sources, nitrogen sources, inorganic salts, and the like and enables efficient culture of lactic acid bacteria. Examples of carbon sources that can be used include lactose, glucose, sucrose, fructose, galactose, and molasses. Examples of nitrogen sources that can be used include organic nitrogen-containing substances, such as a casein hydrolysate, a whey protein hydrolysate, a soybean protein hydrolysate, a yeast extract, and a meat extract. Examples of inorganic salts that can be used include phosphate, sodium, potassium, magnesium, manganese, iron, and zinc. Examples of media suitable for culture of lactic acid bacteria include an MRS liquid medium, a GAM medium, a BL medium, Briggs Liver Broth, animal milk, skimmed milk, and milk whey. Preferably, a sterilized MRS medium can be used. In the case of food application, a medium consisting of a food material and a food additive can also be used. Examples of a natural medium that can be used include tomato juice, carrot juice, or another type of vegetable juice, or apple, pineapple, or grape fruit juice.

Culture is carried out at 20°C to 50°C, preferably 25°C to 42°C, and more preferably about 37°C under anaerobic conditions. Temperature conditions can be adjusted using a thermostat bath, a mantle heater, a jacket, or the like. The term "anaerobic conditions" as used herein refers to a low-oxygen environment in which lactic acid bacteria are able to proliferate. For example, anaerobic conditions can be provided by using an anaerobic chamber, anaerobic box, or airtight container or bag containing a deoxidizer, or by simply sealing a culture container. Examples of culture formats include static culture, shake culture, and tank culture. The period of culture can be, for example, 3 hours to 96 hours, although the period is not limited thereto. In the beginning of culture, the pH of a medium is preferably maintained at 4.0 to 8.0.

When *Lactobacillus amylovorous* CP1563 (Accession Number: FERM BP-11255) is used as lactic acid bacteria, for example, lactic acid bacteria are seeded into a food-grade medium for culturing lactic acid bacteria, and culture can be conducted at about 37°C overnight (about 18 hours).

### [Microbial cell powder]

The "microbial cell powder" used for the beverage of the present invention can be obtained by drying a culture solution of microbial cells with the use of methods and apparatuses known in the art to make powder. Examples of specific drying methods include, but are not particularly limited to, spray drying, drum drying, hot air drying, vacuum drying, and lyophilization, which can be used alone or in combination.

### [Disrupted microbial cell powder]

The "disrupted microbial cell powder" used for the beverage of the present invention is prepared by disrupting a cellular structure of microbial cells to damage the cells and processing such powder into a finer powder than a microbial cell powder that is simply dried via lyophilization or other techniques. The entirety of the disrupted microbial cells are to be recovered without further processing (i.e., substantially all components constituting cells).

Microbial cells can be disrupted with the use of methods and apparatuses known in the art, such as physical disruption, grinding treatment, enzymatic lysis treatment, chemical treatment, or autolysis treatment.

Physical disruption may be carried out using either a wet system (which is a treatment applied to a microbial cell suspension) or a dry system (which is a treatment applied to a microbial cell powder). Microbial cells can be damaged by agitation using, for example, a homogenizer, ball mill, bead mill, or satellite mill, or by pressure application using, for example, a jet mill, French press, or cell disruptor, or by filtration using a filter.

Enzymatic lysis treatment is carried out by disrupting cell walls of microbial cells using an enzyme such as a lysozyme.

Chemical treatment is carried out by disrupting the cellular structures of microbial cells using a surfactant such as a glycerin fatty acid ester or soybean phospholipid.

Autolysis is carried out by lysing microbial cells using their own enzymes.

Among the treatment techniques described above, physical disruption is particularly preferable because the addition of other reagents or components is not necessary, and dry-type physical disruption is further preferable.

More specifically, physical disruption can be carried out by, for example, a method for treating microbial cell powders using a known dry-type satellite mill cell disruptor (e.g., GOT5 Galaxy 5) in the presence of any of a variety of different balls (e.g., 10-mm zirconia balls, 5-mm zirconia balls, or 1-mm alumina balls) at a rotation speed of 50 to 10,000 rpm (e.g., 190 rpm) for 30 minutes to 20 hours (e.g., 5 hours) or a method for treating microbial cell powders using a known dry-type jet-mill cell disruptor (e.g., Jet-O-Mizer) at a feeding speed of 0.01 to 10,000 g/min (e.g., 0.5 g/min) and a discharge pressure of 1 to 1,000 kg/cm² (e.g., 6 kg/cm²) 1 to 10 times (e.g., once). Also, physical disruption can be carried out by, for example, a method for treating a suspension of microbial cells in a known Dyno-Mill cell disruptor (e.g., a Dyno-Mill disruptor) using glass beads at a peripheral speed of 10.0 to 20.0 m/s (e.g., about 14.0 m/s) and a treatment flow rate of 0.1 to 10 L/10 min (e.g., about 1 L/10 min) at a disruption tank temperature of 10°C to 30°C (e.g., about 15°C) 1 to 7 times (e.g., 3 to 5 times) or a method for treating a suspension of microbial cells in a known wet-type jet-mill cell disruptor (e.g., JN20 Nano Jet Pul) at a discharge pressure of 50 to 1000 Mpa (e.g., 270 Mpa) at a treatment flow rate of 50 to 1000 ml/min (e.g., 300 ml/min) 1 to 30 times (e.g., 10 times).

The disrupted microbial cells obtained by the dry-type method described above can be used in such state, and the disrupted microbial cells obtained by the wet-type method described above may be dried and processed into the form of powders. Examples of specific drying methods include, but are not particularly limited to, spray drying, drum drying, hot air drying, vacuum drying, and lyophilization, which can be used alone or in combination.

The amount of microbial cell powder or disrupted microbial cell powder to be contained in the beverage of the present invention is not particularly limited, and it is preferable if biological activity can be expected. For example, such amount is preferably 0.001% to 1.0% by mass, and more preferably 0.01% to 0.1% by mass.

### [Emulsifier]

The beverage of the present invention preferably contains polyglycerin fatty acid ester or polyglycerin fatty acid ester in combination with organic acid monoglyceride as an emulsifier(s). Polyglycerin fatty acid ester and organic acid monoglyceride may be used in the form of a mixture thereof.

According to the Food Sanitation Act, polyglycerin fatty acid ester has been approved as glycerin fatty acid ester (monoglyceride), and it is composed of polyglycerin formed by dehydration condensation of glycerin and fatty acid connected by ester bonds. Polyglycerin fatty acid ester used in the present invention is preferably a monoester composed of polyglycerin having a polymerization degree of 3 to 10 and fatty acid having 10 to 18 carbon atoms connected by ester bonds. Fatty acid having 10 to 18 carbon atoms may be saturated fatty acid, unsaturated fatty acid, or fatty acid having a linear or branched chain. Examples thereof include lauric acid, myristic acid, palmitic acid, stearic acid, isostearic acid, oleic acid, and linoleic acid. The polymerization degree of a polyglycerin is an average polymerization degree determined based on a hydroxyl value. Such polymerization degree is preferably 3 to 10 (i.e., tri, tetra, penta, hexa, hepta, octa, nona, or decaglycerin), and more preferably 5 to 10.

Specific examples of polyglycerin fatty acid esters used in the present invention include pentaglycerin monolaurate, hexaglycerin monolaurate, decaglycerin monolaurate, pentaglycerin monomyristate, hexaglycerin monomyristate, decaglycerin monomyristate, pentaglycerin monostearate, hexaglycerin monostearate, and decaglycerin monostearate, with pentaglycerin monolaurate, pentaglycerin monomyristate, and decaglycerin monomyristate being particularly preferable. Such polyglycerin fatty acid esters may be used alone or in combinations of two or more.

Organic acid monoglyceride is a derivative in which an organic acid is further connected to a hydroxyl group of monoglycerin fatty acid ester by ester bonds. Organic acids constituting organic acid monoglycerides used in the present invention are not particularly limited, and examples thereof include acetic acid, lactic acid, citric acid, succinic acid, and diacetyl tartaric acid, with succinic acid and diacetyl tartaric acid being particularly preferable, and diacetyl tartaric acid being further preferable. Fatty acids constituting organic acid monoglyceride are not particularly limited, and examples thereof include saturated fatty acids and unsaturated fatty acids, such as caprylic acid, capric acid, lauric acid, myristic acid, palmitic acid, stearic acid, and oleic acid. Specific examples of organic acid monoglycerides used in the present invention include lactic acid ester of glycerin monostearate, citric acid ester of glycerin monostearate, succinic acid ester of glycerin monostearate, and diacetyl tartaric acid ester of glycerin monostearate, with succinic acid ester of glycerin monostearate and diacetyl tartaric acid ester of glycerin monostearate being preferable, and diacetyl tartaric acid ester of glycerin monostearate being more preferable. Such organic acid monoglycerides may be used alone or in combinations of two or more.

When polyglycerin fatty acid ester and organic acid monoglycerides are used, examples of preferable combinations of polyglycerin fatty acid ester and organic acid monoglyceride include a combination of pentaglycerin monolaurate and succinic acid ester of glycerin monostearate, a combination of pentaglycerin monomyristate and diacetyl tartaric acid ester of glycerin monostearate, and a combination of decaglycerin monomyristate, pentaglycerin monolaurate, and succinic acid ester of glycerin monostearate.

Commercially available emulsifiers can be used, and examples thereof include the Sunsoft Series manufactured by Taiyo Kagaku Co., Ltd. and the Poem Series manufactured by Riken Vitamin Co., Ltd.

When polyglycerin fatty acid ester and organic acid monoglyceride are used, the proportion of the polyglycerin fatty acid ester content to the organic acid monoglyceride content in the beverage of the present invention is as described below. When the mass of the polyglycerin fatty acid ester is designated X and the mass of the organic acid monoglyceride is designated Y, the upper limit of Y/X is preferably 10, more preferably 5, further preferably 1, and particularly preferably 1/2, and the lower limit of Y/X is preferably 0, more preferably 1/10, and further preferably 1/6.

The lower limit of the emulsifier content in the beverage of the present invention is preferably 0.001% by mass, more preferably 0.01% by mass, further preferably 0.02% by mass, particularly preferably 0.04% by mass, and most preferably 0.05% by mass. The upper limit of the emulsifier content is preferably 0.2% by mass, more preferably 0.15% by mass, and further preferably 0.11% by mass. If the emulsifier content is less than the aforementioned level, the dispersibility cannot be expected. An emulsifier content that is greater than the aforementioned level is not preferable from the viewpoints of flavor, cost, and cloudiness of liquid coloration.

### [Other components etc.]

The beverage of the present invention may comprise milk. When milk is incorporated into the beverage of the present invention, either animal-derived or plant-derived milk can be used. Examples thereof include animal milk, such as cow milk, goat milk, ewe milk, and horse milk, and plant milk, such as soy milk, with cow milk being generally used. Such milk may be used alone or in combinations of two or more.

The form of raw milk is not particularly limited, and it may be whole milk, skimmed milk, whey, or powdered milk thereof, a milk protein concentrate, or milk reduced from a milk concentrate. Such raw milk may be used alone or in combinations of two or more.

When milk is incorporated into the beverage of the present invention, the amount of solids-non-fat (SNF) contained in the beverage is not particularly limited. From the viewpoint of a flavor and storage stability, such amount is preferably 0.1% to 10% by mass, more preferably 0.1% to 4% by mass, further preferably 0.1% to 2% by mass, and most preferably 0.2% to 1.2% by mass. The solids-non-fat (SNF) figure is determined by subtracting moisture and fat from the ingredients constituting milk, and SNF comprises, as main ingredients, a protein, a carbohydrate, a mineral, a vitamin, and the like.

Carbon dioxide may be incorporated into the beverage of the present invention so as to prepare a carbonated beverage. In such a case, the gas volume of carbon dioxide to be added is not particularly limited, and it is preferably 1.0 to 5.0, and more preferably 2.0 to 4.0. The gas volume is determined by dividing the volume of carbon dioxide dissolved in a carbonated beverage at 1 atm and 20°C by the volume of the carbonated beverage.

The pH level of the beverage of the present invention is not particularly limited, provided that it is in an acidic range. It is preferably less than 6.5, more preferably less than 6, further preferably less than 4.5, and particularly preferably less than 4.2. When producing the beverage of the present invention, it is not necessary to adjust the pH level, provided that the pH level is within the aforementioned range, depending on the raw material to be used. If the pH level is outside the aforementioned range, the pH level is adjusted with the use of a pH modifier. As a pH modifier, an organic or inorganic edible acid that is generally used as an acidifier or a salt thereof may be used. Examples thereof include organic acids, such as citric acid, malic acid, tartaric acid, acetic acid, phytic acid, lactic acid, fumaric acid, succinic acid, and gluconic acid, inorganic acid such as phosphoric acid, and sodium salt, calcium salt, or potassium salt of such organic or inorganic acid. The amount of pH modifier to be used is not particularly limited, provided that the pH level can be adjusted to the level of interest and the beverage flavor is not affected.

While the Brix level of the beverage of the present invention is not particularly limited, it is preferably 0.1 to 16, more preferably 0.1 to 11, and further preferably 0.1 to 5 from the viewpoint of flavor or calories. The Brix (Bx) level is an indicator measured with the use of a sugar refractometer at 20°C. For example, it refers to solid content (Bx) measured at 20°C with the use of a digital refractometer (Rx-5000, manufactured by Atago Co., Ltd.)

In order to impart the beverage of the present invention with a sweet taste and adjust the Brix level (Bx) within the aforementioned range, for example, a monosaccharide (e.g., glucose, fructose, xylose, or galactose), a disaccharide (e.g., sucrose, maltose, lactose, trehalose, or isomaltulose), an oligosaccharide (e.g., fructooligosaccharide, maltooligosaccharide, isomaltooligosaccharide, galactooligosaccharide, or coupling sugar), a sugar alcohol (e.g., erythritol, xylitol, sorbitol, maltitol, lactitol, reduced isomaltulose, or reduced glutinous starch syrup), or isomerized glucose syrup (e.g., fructose glucose liquid sugar) may be incorporated. A high-intensity sweetener, such as sucralose, aspartame, acesulfame potassium, or *Stevia rebaudiana,* may be added.

In addition to the microbial cell powder, the emulsifier, the milk, and the other substances described above, other raw materials that are generally used for beverage products can be adequately selected and incorporated into the beverage of the present invention, provided that such substances do not adversely affect the effects of interest. For example, fruit juice or vegetable juice can be incorporated into the beverage of the present invention. Examples of fruit juice include apple juice, orange juice, mandarin orange juice, lemon juice, grapefruit juice, melon juice, grape juice, banana juice, peach juice, strawberry juice, blueberry juice, and mango juice. Examples of vegetable juice include tomato juice, carrot juice, pumpkin juice, pimento juice, cabbage juice, broccoli juice, celery juice, spinach juice, kale juice, and Mulukhiyah juice. Juice squeezed from a fruit or vegetable can be used in such state, or such juice may be concentrated. Cloudy fruit or vegetable juice containing insoluble solids or clear fruit or vegetable juice prepared by removing insoluble solids via fine filtration, enzyme treatment, or ultrafiltration may also be used.

A variety of additives that are approved for use in beverages may be added to the beverage of the present invention. Examples of such additives include thickeners (e.g., soybean polysaccharide, pectin, carragheenan, gellan gum, xanthan gum, and guar gum), antioxidants (e.g., tocopherol, ascorbic acid, and cysteine hydrochloride), aroma chemicals (e.g., lemon flavor, orange flavor, grapefruit flavor, peach flavor, and apple flavor), and pigments (e.g., carotenoid, anthocyanin, safflower, gardenia, caramel, and various artificial colorants). In the hope of enhanced health functions, various functional ingredients, such as vitamins (e.g., those of the vitamin B family, vitamin C, vitamin E, and vitamin D), minerals (e.g., calcium, potassium, and magnesium), and dietary fiber may be added.

It is sufficient for a method for producing the beverage of the present invention to comprise a step of mixing a solution containing microbial cell powders with an emulsifier solution containing polyglycerin fatty acid ester dispersed in an alkaline solution at 50°C to 90°C and homogenizing the mixture. Other steps are performed in accordance with a general method for producing such beverage.

The method for producing the beverage of the present invention may comprise a step of mixing a solution containing microbial cell powders with an emulsifier solution containing polyglycerin fatty acid ester and organic acid monoglyceride dispersed in an alkaline solution at 50°C to 90°C and homogenizing the mixture. The microbial cell powders may be the disrupted microbial cell powders described above.

The pH level of an alkaline solution used for the method of production is not particularly limited, provided that it is within the alkaline range. The pH level is preferably between 7.5 and 12.

Homogenization may be carried out in accordance with a conventional technique with the use of a homogenizer that is generally used for food processing. A pressure of approximately 10 to 30 MPa is preferably applied with the aid of such homogenizer. Homogenization may be carried out at any temperature (e.g., 5°C to 25°C), and homogenization may also be carried out under general heating conditions (e.g., 50°C to 90°C). In general, sterilization is preferably carried out before the homogenization treatment and before or after the beverage has been introduced into the container after homogenization. Sterilization treatment is not particularly limited, and general techniques, such as retort sterilization, batch sterilization, or plate sterilization, can also be employed.

Types of containers to be filled with the beverage of the present invention are not particularly limited. For example, containers made of glass, plastics (e.g., polyethylene terephthalate (PET), polyethylene (PE), or polypropylene (PP)), metal, or paper can be used. The container volume is not particularly limited. For example, it may be 100 to 2,000 ml, and an adequate volume can be selected in view of, for example, the microbial cell amount.

### 2. Method for improving the dispersibility of sediment or aggregate of microbial cell powder in food or beverage product

The method for improving the dispersibility of a sediment or aggregate of microbial cell powders in a food or beverage product according to the present invention comprises mixing a solution containing microbial cell powders with an emulsifier solution containing polyglycerin fatty acid ester dispersed in an alkaline solution at 50°C to 90°C and homogenizing the mixture. According to the method for improving the dispersibility of a sediment or aggregate of microbial cell powders in a food or beverage product of the present invention, a solution containing microbial cell powders may be mixed with an emulsifier solution containing polyglycerin fatty acid ester and organic acid monoglyceride dispersed in an alkaline solution at 50°C to 90°C, and the mixture may then be homogenized. The microbial cell powders may be the disrupted microbial cell powders described above.

The method for improving the dispersibility of a sediment or aggregate of microbial cell powders of the present invention is applicable to any food or beverage product at the time of production or during storage.

The term "food or beverage product" used herein refers to, in addition to general food or beverage products, foods that can be ingested for the purpose of health maintenance or improvement other than medicines, such as a health food, functional food, food with health claims, or specific-use food. Foods provided under the styles of nutritional supplements, health supplements, and supplements are within the scope of health foods. Examples of foods with health claims include foods for specified health use and foods with nutrient function claims, which are defined by the Food Sanitation Act or the Health Promotion Act, and can be labelled so as to indicate particular health preservation effects, and functions of nutrient components, and/or reduced risk of developing diseases; and foods with function claims, which is defined by the Food Labeling Act, and can be labelled with the functions based on scientific grounds filed with the Director-General of the Consumer Affairs Agency. Examples of specific-use foods include foods for people with diseases, foods for elderly people, foods for infants, and foods for pregnant women provided with indications to the effect that such foods are suitable for particular targets or patients with particular diseases. The food or beverage product may be in any form, provided that it is adequately eaten. For example, the product may be either a solid, liquid, jelly, capsule, cream, or paste.

Food or beverage products are not particularly limited, provided that such food or beverage products are able to contain microbial cells, such as lactic acid bacteria or yeast cells. Examples thereof include beverages (e.g., milk beverages, carbonated beverages, fruit juice beverages, vegetable juice beverages, tea beverages, coffee beverages, functional beverages, and sports beverages), dairy products (e.g., yogurt, cheese, mousse, pudding, cream, butter, and ice cream), soups (e.g., consommé, potage, and ramen soup), sauces (e.g., tomato sauces, pasta sauces, and demiglace sauces), and seasonings (e.g., soy sauce, stock sauce, baste, soup stock, seasonings for simmered foods, seasonings for pickles, and dressings).

### Examples

Hereafter, the present invention is described in greater detail with reference to the examples, although the present invention is not limited to these examples.

### (Reference Example 1) Preparation of lactic acid bacteria powders (undisrupted)

*Lactobacillus amylovorus* CP1563 cells (Accession Number FERM BP-11255) or *Lactobacilus acidophilus* CL-92 cells (Accession Number FERM BP-4981) were cultured using a food-grade culture medium for lactic acid bacteria prepared in-house at 37°C for 18 hours, and cells were then collected via filter concentration. The concentrate was sterilized by increasing the temperature to 90°C, and powders of lactic acid bacteria were obtained via lyophilization.

### (Reference Example 2) Preparation of disrupted lactic acid bacteria powders

*Lactobacillus amylovorus* CP1563 cells were cultured using a food-grade culture medium for lactic acid bacteria prepared in-house at 37°C for 18 hours, and cells were then collected via filter concentration. The concentrate was sterilized by increasing the temperature to 90°C, and powders of lyophilized lactic acid bacteria were obtained via lyophilization. The powders of lyophilized lactic acid bacteria were disrupted using a dry-type jet mill (FS-4, Seishin Enterprise Co., Ltd.), and powders of disrupted lactic acid bacteria with the average major diameters thereof which had been reduced to 70% or less than that before treatment (e.g., from 2.77 µm to 1.30 µm) were obtained.

### (Examples 1 to 8 and Comparative Examples 1 to 3) Test for effects attained with the addition of emulsifier

### (1) Preparation of beverage sample

A milk-based carbonated beverage sample of the formulation shown in Table 1 was prepared in accordance with the procedure described below. Reconstituted skim milk (20% by mass, 250 g) was mixed with 400 g of a solution of 3% by mass of soybean polysaccharide (tradename: SM-1200, manufactured by San-Ei Gen F.F.I., Inc.), and 240 g of an aqueous solution of 10% by mass of citric acid was added thereto, followed by thorough agitation.

**[Table 1]**

| | | |
|---|---|---|
| Content Rate (mass %) | Skimmed milk | 0.5 |
| | Microbial cell powder | 0.04 |
| | Soybean polysaccharide | 0.12 |
| | Citric acid (anhydride) | 0.24 |
| | Trisodium citrate | 0.1 |
| | Emulsifier | (See Table 2) |
| | Water | Balance |

Separately, the commercially available emulsifiers for food application described below were added to 100 g of an aqueous solution of 10% by mass of trisodium citrate heated to 60°C to 80°C in the amounts shown in Table 2. Thus, a homogeneously mixed solution of trisodium citrate and emulsifiers was prepared. To this mixture, 400 g of a diluent containing 1% by mass of undisrupted or disrupted lactic acid bacteria (prepared in Reference Examples 1 and 2) was added, and the mixture was agitated until a homogeneous solution was obtained.

### <Emulsifiers>

### [Polyglycerin fatty acid ester]

a. Pentaglycerin monomyristate (tradename: Sunsoft A-141EP, manufactured by Taiyo Kagaku Co., Ltd.)
b. Decaglycerin monomyristate (tradename: Sunsoft Q-14YP, manufactured by Taiyo Kagaku Co., Ltd.)
c. Pentaglycerin monolaurate (tradename: Sunsoft A-121E, manufactured by Taiyo Kagaku Co., Ltd.)

### [Organic acid monoglyceride]

d. Succinic acid ester of glycerin monostearate (tradename: Sunsoft No. 681SPV, manufactured by Taiyo Kagaku Co., Ltd.)
e. Diacetyl tartaric acid ester of glycerin monostearate (tradename: Sunsoft No. 641D, manufactured by Taiyo Kagaku Co., Ltd.)

### [Other emulsifiers]

f. Sucrose stearic acid ester (tradename: Sucrose fatty acid ester A, manufactured by Taiyo Kagaku Co., Ltd.)
g. Sorbitan monostearate (tradename: Sunsoft No. 61S, manufactured by Taiyo Kagaku Co., Ltd.)

The aforementioned mixed solution of the reconstituted skim milk and the soybean polysaccharide solution, which is supplemented with the aqueous citric acid solution, was mixed with the mixed solution of trisodium citrate and emulsifiers, which is supplemented with powders of undisrupted or disrupted lactic acid bacteria, and the resultant was homogenized to obtain a starting beverage solution. Homogenization was carried out using a laboratory homogenizer (model: 15MR, manufactured by APV Gaulin) at treatment temperature of 20°C and treatment pressure of 15 MPa.

Ion exchange water and additive-free carbonated water were added to the starting beverage solution so as to bring the volume of the solution to a normal amount (10,000 g), thereby adjusting the carbon dioxide volume to 2.4, and the resultant was introduced into a pressure-heat resistant PET bottle. Thereafter, sterilization was carried out at a cold spot at which treatment could be continued at 65°C for 10 minutes, and a bottled, milk-based carbonated beverage (hereafter, referred to as a "beverage sample") was thus obtained. The beverage exhibited a Bx of 1.2, a pH of 3.7, and SNF of 0.5.

### (2) Beverage sample storage test

The beverage sample prepared in (1) was allowed to stand in an incubator at 5°C for 14 days. The resulting sample was subjected to inversion mixing 5 times, the container was opened to discharge the content, and the bottom of the container was then observed. Evaluation took place using a 4-point scale. A sample in which powders of lactic acid bacteria substantially covered the entire area of the bottom was evaluated as "×," a sample in which powders covered a part of the bottom was evaluated as "Δ," a sample in which substantially no powders remained was evaluated as "○," and a sample in which no powders remained was evaluated as "⊚." Fig. 1 shows photographs of the bottoms and the overall appearances of the containers, indicating the evaluation standards. The evaluation results are shown in Table 2 below.

**[Table 2]**

| | | Examples | | | | | | | | Comparative Examples | | |
|---|---|---|---|---|---|---|---|---|---|---|---|---|
| | | 1 | 2 | 3 | 4 | 5 | 6 | 7 | 8 | 1 | 2 | 3 |
| Emulsifier content rate (mass %) | a | 0.035 | 0.035 | 0.035 | - | - | - | - | - | - | - | - |
| | b | - | - | - | 0.017 | 0.017 | 0.017 | - | - | - | - | - |
| | c | - | - | - | 0.069 | 0.069 | 0.069 | 0.027 | 0.069 | - | - | - |
| | d | - | - | - | 0.017 | 0.017 | 0.017 | 0.013 | - | - | - | - |
| | e | 0.017 | 0.017 | 0.017 | - | - | - | - | - | - | - | - |
| | f | - | - | - | - | - | - | - | - | - | 0.052 | - |
| | g | - | - | - | - | - | - | - | - | - | - | 0.052 |
| Cell | | CP1563 | CL92 | CP1563 | CP1563 | CL92 | CP1563 | CP1563 | CP1563 | CP1563 | CP1563 | CP1563 |
| Cell form | | Undisrupted | Undisrupted | Disrupted | Undisrupted | Undisrupted | Disrupted | Disrupted | Disrupted | Disrupted | Disrupted | Disrupted |
| Evaluation Results | 5°C, 14 days | ○ | ○ | ⊚ | ○ | ○ | ⊚ | ○ | ○ | × | Δ | × |

| | | | | | | | | | | | | |
|---|---|---|---|---|---|---|---|---|---|---|---|---|
| a. Pentaglycerin monomyristate b. Decaglycerin monomyristate c. Pentaglycerin monolaurate d. Succinic acid ester of glycerin monostearate e. Diacetyl tartaric acid ester of glycerin monostearate f. Sucrose stearic acid ester g. Sorbitan monostearate | | | | | | | | | | | | |

As shown in Table 2, Examples 1 to 8 using emulsifiers comprising polyglycerin fatty acid ester alone or polyglycerin fatty acid ester in combination with organic acid monoglyceride exhibited the improved dispersibility of powders of lactic acid bacteria, compared with Comparative Example 1 using no emulsifier and Comparative Examples 2 and 3 using emulsifiers of sucrose stearic acid ester or sorbitan monostearate. In particular, remarkable improvement was observed in Example 3 using pentaglycerin monomyristate and diacetyl tartaric acid ester of glycerin monostearate at a ratio of 2:1 (0.052% by mass in total) and Example 6 using decaglycerin monomyristate, pentaglycerin monolaurate, and succinic acid ester of glycerin monostearate at a ratio of 1:4:1 (0.103% by mass in total).

### (Examples 9 to 21 and Comparative Examples 4 and 5) Test for effects of addition of emulsifier

### (1) Preparation of beverage sample

A milk-based carbonated beverage sample of the formulation shown in Table 3 was prepared in accordance with the procedure described below. A solution of 20% by mass of reconstituted skim milk (250 g) and 400 g of a solution of 3% by mass of soybean polysaccharide (tradename: SM-1200, manufactured by San-Ei Gen F.F.I., Inc.) were mixed with 13 g of nigerooligosaccharide-containing syrup (tradename: Nisshoku Taste-Oligo, manufactured by Nihon Shokuhin Kako Co., Ltd.) and 3.9 g of a high-intensity sweetener (aspartame, acesulfame potassium, or sucralose), and 240 g of an aqueous solution of 10% by mass of citric acid was added thereto, followed by thorough agitation.

**[Table 3]**

| | | |
|---|---|---|
| Content rate (mass %) | Skimmed milk | 0.5 |
| | Microbial cell powder | 0.04 |
| | Soybean polysaccharide | 0.12 |
| | Citric acid (anhydride) | 0.24 |
| | Trisodium citrate | 0.1 |
| | Nigerooligosaccharide syrup | 0.13 |
| | Aspartame | 0.018 |
| | Acesulfame potassium | 0.015 |
| | Sucralose | 0.006 |
| | Aroma chemical | 0.23 |
| | Emulsifier | (See Table 4) |
| | Water | Balance |

Separately, the commercially available emulsifiers for food application (the emulsifiers a. to g. described above) were added to 100 g of an aqueous solution of 10% by mass of trisodium citrate heated to 60°C to 80°C in the amounts shown in Table 4. Thus, a homogeneously mixed solution of trisodium citrate and emulsifiers was prepared. To this mixture, 400 g of a diluent containing 1% by mass of powders of disrupted lactic acid bacteria (prepared in Reference Example 2) was added, and the mixture was agitated until a homogeneous solution was obtained.

The aforementioned mixed solution of the reconstituted skim milk and the soybean polysaccharide solution, which is supplemented with the aqueous citric acid solution, was mixed with the mixed solution of trisodium citrate and emulsifiers, which is supplemented with powders of undisrupted or disrupted lactic acid bacteria, and the resultant was homogenized under the conditions described above to obtain a starting beverage solution. The starting beverage solution was filled with carbon dioxide in the manner described above, and the resultant was sterilized to obtain a bottled, milk-based carbonated beverage, which was designated as a beverage sample.

### (2) Beverage sample storage test

The beverage sample prepared in (1) was subjected to the storage test under the same conditions as described above and evaluation was made in accordance with the same standards. The results are shown in Table 4.

**[Table 4]**

| | | Examples | | | | | | | | | | | | | Comparative Examples | |
|---|---|---|---|---|---|---|---|---|---|---|---|---|---|---|---|---|
| | | 9 | 10 | 11 | 12 | 13 | 14 | 15 | 16 | 17 | 18 | 19 | 20 | 21 | 4 | 5 |
| Emulsifier content rate (mass %) | a | 0.013 | 0.027 | 0.027 | 0.035 | - | - | - | - | 0.027 | - | - | - | - | - | - |
| | b | - | - | - | - | - | - | - | - | - | 0.013 | 0.017 | 0.013 | 0.017 | - | - |
| | c | - | - | - | - | 0.027 | 0.03 | 0.037 | 0.033 | - | 0.053 | 0.069 | 0.053 | 0.069 | - | - |
| | d | 0.027 | 0.013 | 0.017 | 0.013 | 0.013 | 0.01 | 0.003 | 0.007 | - | 0.013 | 0.017 | - | - | - | - |
| | e | - | - | - | - | - | - | - | - | 0.017 | - | - | 0.013 | 0.017 | - | - |
| | f | - | - | - | - | - | - | - | - | - | - | - | - | - | 0.052 | - |
| | g | - | - | - | - | - | - | - | - | - | - | - | - | - | - | 0.052 |
| Cell | | CP1563 | CP1563 | CP1563 | CP1563 | CP1563 | CP1563 | CP1563 | CP1563 | CP1563 | CP1563 | CP1563 | CP1563 | CP1563 | CP1563 | CP1563 |
| Cell form | | Disrupted | Disrupted | Disrupted | Disrupted | Disrupted | Disrupted | Disrupted | Disrupted | Disrupted | Disrupted | Disrupted | Disrupted | Disrupted | Disrupted | Disrupted |
| Evaluation Results | 5°C 14 days | ○ | ○ | ○ | ○ | ⊚ | ○ | ○ | ○ | ⊚ | ⊚ | ⊚ | ○ | ○ | × | × |

| | | | | | | | | | | | | | | | | |
|---|---|---|---|---|---|---|---|---|---|---|---|---|---|---|---|---|
| a. Pentaglycerin monomyristate b. Decaglycerin monomyristate c. Pentaglycerin monolaurate d. Succinic acid ester of glycerin monostearate e. Diacetyl tartaric acid ester of glycerin monostearate f. Sucrose stearic acid ester g. Sorbitan monostearat | | | | | | | | | | | | | | | | |

As shown in Table 4, Examples 9 to 21 using emulsifiers comprising polyglycerin fatty acid ester and organic acid monoglyceride exhibited the improved dispersibility of powders of lactic acid bacteria, compared with Comparative Examples 4 and 5 using emulsifiers comprising sucrose stearic acid ester or sorbitan monostearate. In particular, remarkable improvement was observed in Example 13 using pentaglycerin monolaurate and succinic acid ester of glycerin monostearate at a ratio of 2:1 (0.04% by mass in total), Example 17 using pentaglycerin monomyristate and diacetyl tartaric acid ester of glycerin monostearate at a ratio of 27:17 (0.044% by mass in total), and Examples 18 and 19 using decaglycerin monomyristate, pentaglycerin monolaurate, and succinic acid ester of glycerin monostearate at a ratio of 1:4:1 (0.079% by mass and 0.103% by mass in total, respectively).

### Industrial Applicability

The present invention is applicable to the field of production of food or beverage products containing microbial cells.

All publications, patents, and patent applications cited herein are incorporated herein by reference in their entirety.

## Claims

1. A beverage that contains microbial cells comprising (A) microbial cell powder and (B) polyglycerin fatty acid ester composed of polyglycerin having a polymerization degree of 3 to 10 and fatty acid having 10 to 18 carbon atoms connected by ester bonds.

2. The beverage that contains microbial cells according to claim 1, wherein the polyglycerin fatty acid ester is pentaglycerin monolaurate.

3. The beverage that contains microbial cells according to claim 1 or 2, wherein the beverage further contains organic acid monoglyceride.

4. The beverage that contains microbial cells according to claim 3, wherein an organic acid constituting the organic acid monoglyceride is selected from among acetic acid, lactic acid, citric acid, succinic acid, and diacetyl tartaric acid.

5. The beverage that contains microbial cells according to claim 3 or 4, wherein, provided that the polyglycerin fatty acid ester content relative to the total amount of the beverage is designated X and the organic acid monoglyceride content relative to the total amount of the beverage is designated Y, the value of Y/X is 10 or less by mass.

6. The beverage that contains microbial cells according to any one of claims 3 to 5, wherein the beverage contains pentaglycerin monolaurate and succinic acid ester of glycerin monostearate.

7. The beverage that contains microbial cells according to any one of claims 3 to 5, wherein the beverage contains pentaglycerin monomyristate and diacetyl tartaric acid ester of glycerin monostearate.

8. The beverage that contains microbial cells according to any one of claims 3 to 5, wherein the beverage contains decaglycerin monomyristate, pentaglycerin monolaurate, and succinic acid ester of glycerin monostearate.

9. The beverage that contains microbial cells according to claim 1 or 2, wherein the polyglycerin fatty acid ester content in the beverage is 0.001% to 0.2% by mass.

10. The beverage that contains microbial cells according to any one of claims 3 to 8, wherein the content of polyglycerin fatty acid ester and organic acid monoglyceride in the beverage is 0.001% to 0.2% by mass.

11. The beverage that contains microbial cells according to any one of claims 1 to 10, wherein the microbial cells are disrupted cells.

12. The beverage that contains microbial cells according to any one of claims 1 to 11, wherein the microbial cells are lactic acid bacteria.

13. The beverage that contains microbial cells according to claim 12, wherein the lactic acid bacteria belong to the genus *Lactobacillus.*

14. The beverage that contains microbial cells according to any one of claims 1 to 13, wherein the beverage contains milk.

15. The beverage that contains microbial cells according to any one of claims 1 to 14, wherein the beverage contains carbon dioxide.

16. A method for producing a beverage that contains microbial cells, comprising a step of mixing a solution containing microbial cell powders with an emulsifier solution containing polyglycerin fatty acid ester dispersed in an alkaline solution at 50°C to 90°C and homogenizing the mixture.

17. A method for producing a beverage that contains microbial cells, comprising a step of mixing a solution containing microbial cell powders with an emulsifier solution containing polyglycerin fatty acid ester and organic acid monoglyceride dispersed in an alkaline solution at 50°C to 90°C and homogenizing the mixture.

18. The method for producing a beverage that contains microbial cells according to claim 16 or 17, wherein the microbial cells are disrupted cells.

19. A method for improving the dispersibility of a sediment or aggregate of microbial cells in a food or beverage product by mixing a solution containing microbial cell powders with an emulsifier solution containing polyglycerin fatty acid ester dispersed in an alkaline solution at 50°C to 90°C and homogenizing the mixture.

20. A method for improving the dispersibility of a sediment or aggregate of microbial cells in a food or beverage product by mixing a solution containing microbial cell powders with an emulsifier solution containing polyglycerin fatty acid ester and organic acid monoglyceride dispersed in an alkaline solution at 50°C to 90°C and homogenizing the mixture.

21. The method for improving the dispersibility of a sediment or aggregate of microbial cells in a food or beverage product according to claim 19 or 20, wherein the microbial cells are disrupted cells.
